# EUROPEAN PATENT SPECIFICATION

(11) **EP 1 614 508 B1**
(45) Date of publication and mention of the grant of the patent: **22.08.2007**
(21) Application number: 05013995.5
(22) Date of filing: 29.06.2005
(51) Int. Cl.: B25H 1/04

(54) **Support assembly for benchtop tools**
Ständer für tragbare Werkzeugmaschine
Support pour table de machine-outil

(30) Priority: 07.07.2004 US 586482 P
(43) Date of publication of application: 11.01.2006
(73) Proprietor: Black & Decker Inc., Newark, Delaware 19711 (US)
(72) Inventor: Gehret, Robert S., Hampstead Maryland 21074 (US); O'Banion, Michael, Westminster Maryland 21157 (US); Rossetti, Mirco, 06125 Perugia (IT); Guasticchi, Palmiro, (fraz. Rancolfo) 06080 Perugia (IT)
(74) Representative: Bell, Ian Stephen

(56) References cited:
- WO-A-96/00638
- WO-A-98/25038
- DE-U- 29 505 704
- US-A- 4 742 596
- US-B1- 6 471 220
- US-B1- 6 607 015

## Description

This invention relates generally to a support assembly for benchtop tools and more specifically to a folding support assembly for table and/or miter saws.

Benchtop tools, such as table saws, miter saws, etc., tend to be big and bulky. Therefore, they may be difficult to transport from jobsite to jobsite, as well as around the jobsite. Accordingly, it is an object of the invention to provide an enhanced support assembly to assist in such transportation.

Examples of the prior art are disclosed in US Patent Nos 6607015 and 6471220 and in international Patent Application Publication Nos WO98/25038 and WO96/00638.

According to the present invention there is provided:
a power tool comprising:
   a base assembly;
   a table supported by the base assembly;
   a saw assembly supported by the table;
   a first leg pivotally connected to the base assembly;
   a locking mechanism for fixing the position of the first leg relative to the base assembly, wherein the base assembly has a first channel for receiving the first leg when the first leg is locked in a first position and has a second channel intersecting the first channel for receiving the first leg when the first leg is locked in a second position and wherein the first leg extends below the base assembly in the first position, and the first leg does not extend below the base assembly in the second position; and
   a second leg movable between a first position where the second leg extends below the base assembly, and a second position characterised in that in said second position the first and second legs acts as first and second handle and that the first and second legs extend away from the base assembly in opposite directions when in the second position.

In accordance with the present invention, an improved support assembly is employed. The power tool has a base assembly, a table supported by the base assembly, a saw assembly supported by the table, a first leg pivotally connected to the base assembly, and a locking mechanism for fixing the position of the first leg relative to the base assembly, wherein the base assembly has at least one channel for receiving the first leg when the first leg is locked.

Additional features and benefits of the present invention are described, and will be apparent from, the accompanying drawings and the detailed description below.

The accompanying drawings illustrate preferred embodiments of the invention according to the practical application of the principles thereof, and in which:
FIG. 1 is a side view of a miter saw with a support assembly according to the invention;
FIG. 2 is a side view of a table saw with a support assembly according to the invention;
FIG. 3 illustrates a first embodiment of the support assembly; and
FIG. 4 illustrates a second embodiment of the support assembly.

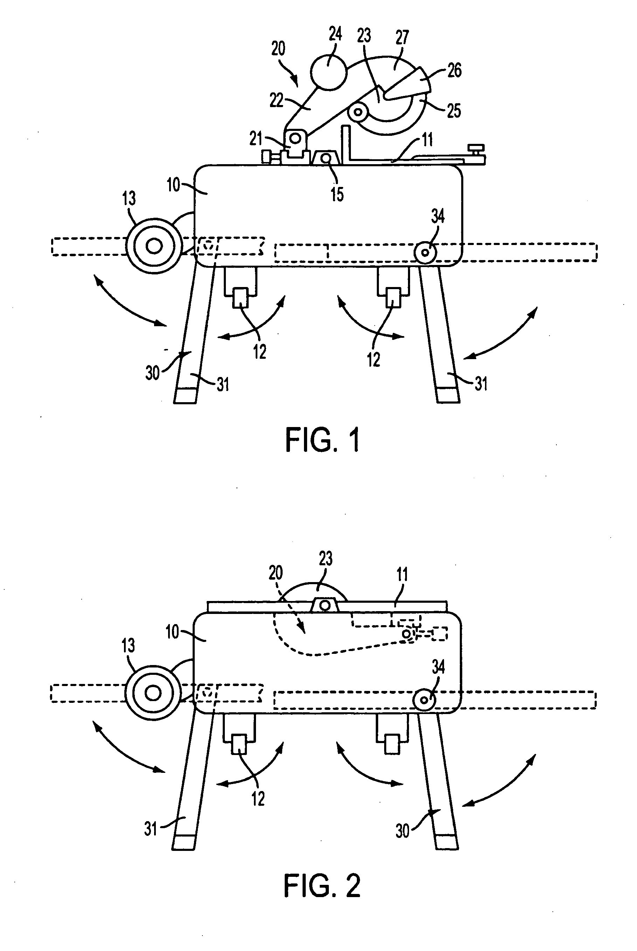

The invention is now described with reference to the accompanying figures, wherein like numerals designate like parts. Referring to FIG. 1, a miter saw may include a base assembly 10, a table 11 supported by base assembly 10, and a saw assembly 20 supported by the table 11. Saw assembly 20 may include a trunnion 21 disposed on the table 11, a pivotable arm 22 pivotably attached to trunnion 21, a motor 24 supported by the arm 22 and driving a blade 23. Arm 22 also supports upper blade guard 27, which covers an upper part of blade 23. Lower blade guard 25 is pivotally attached to upper blade guard 27. An auxiliary blade guard 26 may be pivotably connected to lower blade guard 25. Persons skilled in the art will recognize that saw assembly 20 can be pivoted downwardly towards table 11 to cut a workpiece placed on table 11.

Referring to FIG. 2, a table saw may include a base assembly 10, a table 11 supported by base assembly 10, and a saw assembly 20 supported by and disposed underneath the table 11. Saw assembly 20 includes a blade 23 extending through the table 11, so that a user can dispose a workpiece on table 11 and push it towards blade 23 for cutting.

Persons skilled in the art will recognize that the power tool shown in FIGS. 1-2 may be the same power tool, i.e., a combination table and miter saw. Such power tool may have table 11 pivotally attached to base assembly 10 via joint 15 so that, when the table 11 is in one orientation, the saw assembly 20 can act as a miter saw, and when the table 11 is rotated via joint 15 to the other orientation, the power tool can act as a table saw. Nonetheless, persons skilled in the art will recognize that the invention described below can be applicable to non-combined miter saws and non-combined table saws, as well as to other tools.

Preferably, base assembly 10 has at least one wheel 13 thereon.

Base assembly 10 may also support four leg assemblies 30. As shown in FIGS. 1-2, two leg assemblies 30 may be disposed on the base assembly 10 near wheel(s) 13, whereas two other leg assemblies 30 may be disposed on the base assembly 10 away from wheel(s) 13.

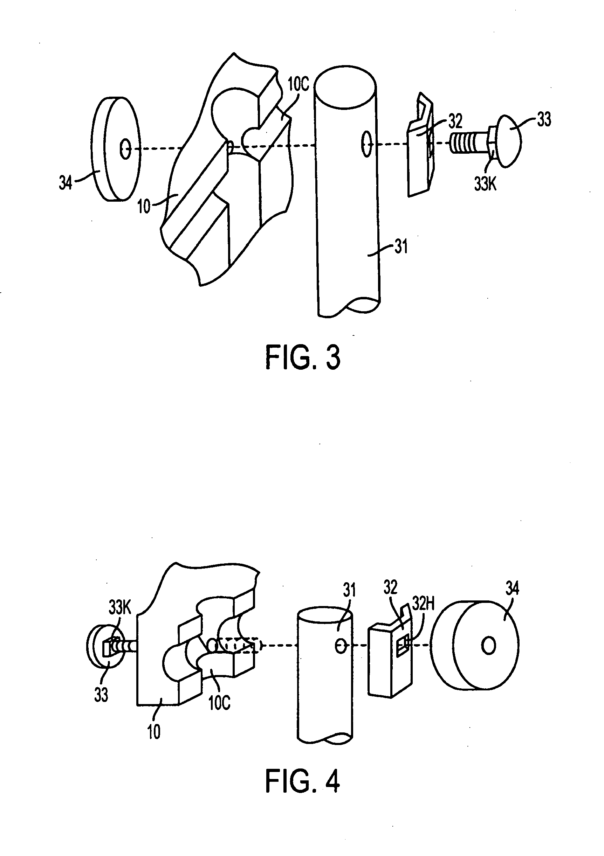

Leg assemblies 30 are pivotally attached to base assembly 10. FIG. 3 shows a first embodiment of leg assembly 30. Leg assembly 30 may include a leg 31 which may be disposed against base assembly 10 and is preferably hollow, a bracket 32 disposed on leg 31, and a bolt 33 which extends through bracket 32, leg 31, and base assembly 10.

A knob 34 may threadingly engage bolt 33 on the other side of base assembly 10, locking the leg 31 in the desired position. Persons skilled in the art will recognize that it is preferable to provide a key 33K on bolt 33 that can engage a keyed hole on bracket 32 or leg 31 (see, e.g., hole 32H in FIG. 4), to prevent rotation of bolt 33 when knob 34 is rotated.

An alternate leg assembly 30 is shown in FIG. 4, where like numerals refer to like parts. The main difference is that bolt 33 is inserted into one side of base assembly 10, extends on the other side through leg 31, bracket 32, and threadingly engages knob 34. Persons skilled in the art will recognize that key 33K on bolt 33 preferably engages a keyed hole on base assembly 10 to prevent rotation of bolt 33 when knob 34 is rotated.

As shown in FIGS. 3-4, base assembly 10 has at least one groove or channel 10C which receives leg 31 therein when leg 31 is locked by the rotation of knob 34. Such channel 10C maintains leg 31 in place. Preferably, base assembly 10 has multiple channels 10C to provide for multiple positions of leg 31 relative to base assembly 10.

With such arrangement, all legs 31 can be disposed downwardly (as shown in solid lines in FIGS. 1-2) for use of the power tool in an elevated position.

Similarly, all legs 31 can be folded into base assembly 10. In such position, the user can place the power tool on the ground and use it in a lowered position. Persons skilled in the art will recognize that the base assembly 10 may have feet 12 to support the power tool on the ground. Preferably feet 12 are made of rubber or any other non-slip material.

Alternatively, the user may fold legs 31 away from wheel(s) 13, so that the legs 31 closest to wheel(s) 13 are within base assembly 10, whereas the legs 31 farthest from wheel(s) 13 extend beyond base assembly 10. In such position, a user can use the legs 31 extending beyond base assembly 10 as handles. The user can then lift such legs so that wheel(s) 13 contact the ground and the power tool can be moved in a manner similar to a wheel barrow.

Legs 31 may also be folded so that all legs 31 extend beyond base assembly 10. In this manner, two users can each lift a pair of legs 31 and carry the power tool in a manner similar to a stretcher.

Persons skilled in the art can see the different positions of legs 31 (other than the downwardly-extending position) in broken lines on FIGS. 1-2.

## Claims

1. A power tool comprising:
a base assembly (10);
a table (11) supported by the base assembly;
a saw assembly (20) supported by the table;
a first leg (31) pivotally connected to the base assembly;
a locking mechanism (32,33,34) for fixing the position of the first leg relative to the base assembly, wherein the base assembly has a first channel (10c) for receiving the first leg when the first leg is locked in a first position and has a second channel (10c) intersecting the first channel for receiving the first leg when the first leg is locked in a second position and wherein the first leg extends below the base assembly in the first position, and the first leg does not extend below the base assembly in the second position; and
a second leg (31) movable between a first position where the second leg extends below the base assembly, and a second position **characterised in that** in said second position the first and second legs acts as first and second handle and that the first and second legs extend away from the base assembly in opposite directions when in the second position.

2. The power tool of Claim 1, wherein the first leg (31) is disposed underneath the saw assembly (20) in a third position.

3. The power tool of Claim 1, wherein the base assembly (10) further comprises at least one wheel (13).

4. The power tool of Claim 3, wherein the first leg (31) acts as a handle in the second position, so the power tool can be lifted via the first leg when resting on the at least one wheel (13).

5. The power tool of Claim 1, wherein the locking mechanism further comprises a clamp (32) sandwiching the first leg (31) between the base assembly (10) and the clamp.

6. The power tool of Claim 5, wherein a bolt (33) extends through the base assembly (10), the first leg (31) and the clamp (32).

7. The power tool of Claim 6, wherein a locking knob (34) threadingly engages the bolt(33).

8. The power tool of Claim 1, wherein the table (11) is pivotally attached to the base assembly (10).

9. The power tool of Claim 8, wherein the table (11) is movable between a first position where the saw assembly (20) is disposed above the table, and a second position where the saw assembly is disposed below the table.

10. The power tool of Claim 1, further comprising feet (12) extending downwardly from the base assembly (10) to support the base assembly when the first leg is not supporting the base assembly.

## Patentansprüche

1. Angetriebenes Werkzeug mit
einer Basisanordnung (10),
einem von der Basisanordnung gehaltenen Tisch (11),
einer von dem Tisch gehaltenen Sägeanordnung (20),
einem ersten Bein (31), das schwenkbar mit der Basisanordnung verbunden ist,
einem Verriegelungsmechanismus (32, 33, 34) zum Festlegen der Stellung des ersten Beines in Bezug auf die Basisanordnung, wobei die Basisanordnung einen ersten Durchgang (10c) zur Aufnahme des ersten Beines hat, wenn das erste Bein in einer ersten Stellung verriegelt ist, und einen den ersten Durchgang schneidenden zweiten Durchgang (10c) zur Aufnahme des ersten Beines, wenn das erste Bein in einer zweiten Stellung verriegelt ist, und wobei sich das erste Bein in der ersten Stellung unter die Basisanordnung erstreckt und sich das erste Bein in der zweiten Stellung nicht unter die Basisanordnung erstreckt, und
einem zweiten Bein (31), das zwischen einer ersten Stellung, wo sich das zweite Bein unter die Basisanordnung erstreckt, und einer zweiten Stellung bewegbar ist, **dadurch gekennzeichnet, dass** das erste und das zweite Bein in der zweiten Stellung als ein erster und ein zweiter Griff wirken und dass das erste und das zweite Bein sich von der Basisanordnung in entgegengesetzte Richtungen weg erstrecken, wenn sie in der zweiten Stellung sind.

2. Angetriebenes Werkzeug nach Anspruch 1, wobei das erste Bein (31) in einer dritten Stellung unter der Sägeanordnung (20) angeordnet ist.

3. Angetriebenes Werkzeug nach Anspruch 1, wobei die Basisanordnung (10) ferner wenigstens ein Rad (13) aufweist.

4. Angetriebenes Werkzeug nach Anspruch 3, wobei das erste Bein (31) in der zweiten Stellung als ein Griff wirkt, so dass das angetriebene Werkzeug mittels des ersten Beines angehoben werden kann, wenn es auf dem wenigstens einen Rad (13) ruht.

5. Angetriebenes Werkzeug nach Anspruch 1, wobei der Verriegelungsmechanismus ferner eine Klemme (32) umfasst, die das erste Bein (31) zwischen der Basisanordnung (10) und der Klemme aufnimmt.

6. Angetriebenes Werkzeug nach Anspruch 5, wobei sich ein Bolzen (33) durch die Basisanordnung (10), das erste Bein (31) und die Klemme (32) erstreckt.

7. Angetriebenes Werkzeug nach Anspruch 6, wobei ein Verriegelungsknopf (34) in Gewindeeingriff mit dem Bolzen (33) steht.

8. Angetriebenes Werkzeug nach Anspruch 1, wobei der Tisch (11) schwenkbar an der Basisanordnung (10) angebracht ist.

9. Angetriebenes Werkzeug nach Anspruch 8, wobei der Tisch (11) zwischen einer ersten Stellung, wo die Sägeanordnung (20) über dem Tisch angeordnet ist, und einer zweiten Stellung bewegbar ist, wo die Sägeanordnung unter dem Tisch angeordnet ist.

10. Angetriebenes Werkzeug nach Anspruch 1, ferner mit Füßen (12), die sich von der Basisanordnung (10) nach unten erstrecken, um die Basisanordnung zu halten, wenn das erste Bein die Basisanordnung nicht hält.

## Revendications

1. Outil électrique comprenant :
■ un ensemble de base (10) ;
■ une table (11) supportée par l'ensemble de base ;
■ un ensemble de scie (20) supporté par la table ;
■ une premier pied (31) relié de manière pivotante à l'ensemble de base ;
■ un mécanisme de blocage (32, 33, 34) pour fixer la position du premier pied par rapport à l'ensemble de base, dans lequel l'ensemble de base a un premier canal (10c) pour recevoir le premier pied lorsque le premier pied est bloqué dans une première position, et a un second canal (10c) coupant le premier canal pour recevoir le premier pied lorsque le premier pied est bloqué dans une deuxième position, et dans lequel le premier pied s'étend sous l'ensemble de base dans la première position, et le premier pied ne s'étend pas sous l'ensemble de base dans la deuxième position ; et
■ un second pied (31) mobile entre une première position dans laquelle le second pied s'étend sous l'ensemble de base, et une deuxième position, **caractérisé en ce que** dans ladite deuxième position les premier et second pieds sont utilisés comme une première et une seconde poignée et **en ce que** les premier et second pieds s'étendent à distance de l'ensemble de base, dans des directions opposées lorsqu'ils sont dans la deuxième position.

2. Outil électrique selon la revendication 1,
dans lequel le premier pied (31) est disposé sous l'ensemble de scie (20) dans une troisième position

3. Outil électrique selon la revendication 1, dans lequel l'ensemble de base (10) comprend en pivotante à l'ensemble de base ; outre au moins une roue (13).

4. Outil électrique selon la revendication 3, dans lequel le premeir pied (31) est utilisé comme poignée dans la deuxième position, de sorte que l'outil électrique peut être soulevé par l'intermédiaire du premier pied, lorsqu'il repose sur au moins une roue (13).

5. Outil électrique selon la revendication 1, dans lequel le mécanisme de blocage comprend en outre une bride (32) intercalant le premier pied (31) entre l'ensemble de base (10) et la bride.

6. Outil électrique selon la revendication 5, dans lequel un boulon (33) s'étend à travers l'ensemble de base (10), le premier pied (31) et la bride (32).

7. Outil électrique selon la revendication 6, dans lequel un bouton de verrouillage (34) vient en prise par filetage avec le boulon (33).

8. Outil électrique selon la revendication 1, dans lequel la table (11) est fixée de manière pivotante à l'ensemble de base (10).

9. Outil électrique selon la revendication 8, dans lequel la table (11) est mobile entre une première position dans laquelle l'ensemble de scie (20) est disposé au-dessus de la table, et une deuxième position dans laquelle l'ensemble de scie est disposé sous la table.

10. Outil électrique selon la revendication 1, comprenant en outre des supports (12) s'étendant vers le bas depuis l'ensemble de base (18) pour supporter l'ensemble de base lorsque le premier pied ne supporte pas l'ensemble de base.
